# EUROPEAN PATENT SPECIFICATION

(11) **EP 4 245 409 B1**
(45) Date of publication and mention of the grant of the patent: **18.11.2026**
(21) Application number: 22883727.4
(22) Date of filing: 27.07.2022
(51) Int. Cl.: B01J 23/00, B01J 23/02, B01J 21/06, B01J 23/755, B01J 37/02, B01J 37/08, C01B 3/40, B01J 35/70, B01J 23/58, B01J 23/63, B01J 23/78, B01J 23/83

(54) **METHANE-REFORMING CATALYST AND METHOD FOR PRODUCING SAME**
METHANREFORMIERUNGSKATALYSATOR UND VERFAHREN ZUR HERSTELLUNG DAVON
CATALYSEUR DE REFORMAGE DE MÉTHANE ET SON PROCÉDÉ DE PRODUCTION

(30) Priority: 21.10.2021 KR 20210141052
(43) Date of publication of application: 20.09.2023
(60) Divisional application: 26193854.2 / 4 803 192
(73) Proprietor: LG Chem, Ltd., Seoul 07336 (KR)
(72) Inventor: KIM, Suji, Daejeon 34122 (KR); CHO, Jun Yeon, Daejeon 34122 (KR); CHOI, Jun Seon, Daejeon 34122 (KR); CHOI, Jae Soon, Daejeon 34122 (KR); KIM, Sangjin, Daejeon 34122 (KR); KIM, Sojin, Daejeon 34122 (KR)
(74) Representative: Goddar, Heinz J.
(86) International application number: PCT/KR2022/011080
(87) International publication number: WO 2023/068497

(56) References cited:
- CN-B- 107 930 626
- KR-A- 20020 080 387
- KR-A- 20180 127 267
- KR-A- 20180 136 701
- US-A1- 2006 293 173
- US-A1- 2007 100 190
- US-A1- 2009 286 677
- SUDHAKARAN M.S.P: "Dry Reforming of Propane over [gamma]-Al2O3 and Nickel Foam Supported Novel SrNiO3 Perovskite Catalyst", vol. 9, no. 1, 10 January 2019 (2019-01-10), CH, pages 68, XP093163335, ISSN: 2073-4344, Retrieved from the Internet <URL:https://www.mdpi.com/2073-4344/9/1/68/pdf> DOI: 10.3390/catal9010068

## Description

### [Technical Field]

The present application relates to a catalyst for methane reformation and a method for producing the same.

### [Background Art]

As part of activities to reduce greenhouse gases caused by global warming, many studies on carbon dioxide conversion technologies have been conducted. The carbon dioxide reforming reaction, one of the carbon dioxide conversion technologies, is a technology to obtain synthesis gas composed of hydrogen and carbon monoxide by reacting methane and carbon dioxide.

Synthesis gas is a material with high development value from diverse downstream raw materials. As a method for industrially obtaining synthesis gas (H₂/CO), the reforming reaction of natural gas may be largely divided into steam reforming process, carbon dioxide (CO₂) reforming process, catalytic partial oxidation process, autothermal reforming process, tri-reforming process, such as the following Reaction Schemes 1 to 5, and the like.

[Reaction Scheme 1] CH₄ + H₂O → 3H₂ + CO ΔH = 226 kJ/mol

[Reaction Scheme 2] CH₄ + CO₂ → 2H₂ + 2CO ΔH = 261 kJ/mol

[Reaction Scheme 3] CH₄ + 0.5O₂ → 2H₂ + CO ΔH = -44 kJ/mol

[Reaction Scheme 4] autothermal reforming: Reaction Scheme 1 + Reaction Scheme 3

[Reaction Scheme 5] tri-reforming: Reaction Scheme 1 + Reaction Scheme 2 + Reaction Scheme 3

Meanwhile, various catalysts may be used for reforming activity in the reforming process. Among them, when noble metal catalysts are used in the reforming process, there is an advantage in that the reaction efficiency is high because a relatively low amount of carbon is deposited compared to nickel-based catalysts, but there is a problem in that the economic feasibility deteriorates because noble metal catalysts are expensive.

Accordingly, relatively inexpensive nickel catalysts are usually used in the reforming process. In particular, as the nickel catalyst, a catalyst in which nickel metal is supported on a support such as alumina is often used as a commercial catalyst, but in this case, there is a problem in that the nickel catalyst is deactivated by carbon that is inevitably produced on the surface of the nickel catalyst.

Therefore, there is a need in the art for developing a catalyst which is resistant to carbon deposition and can be effectively applied to the reforming process of methane.

Catalysts, vol. 9, No. 1, page 68, discloses a catalyst for dry-reforming at 500-700°C comprising a reduced SrNiO₃ perovskite layer deposited on a nickel foam support.

KR 20180136701 A discloses a catalyst for reforming a biogas containing methane and carbon dioxide consisting of a layer of Sr_{(1-y)}Y_{y}Ti₍₁₋ₓ₎Ru_{y}O_{(3-δ)} where x = > 0 to < 1 and y preferably > 0 to 0.08 deposited on a monolithic substrate.

KR 20180127267 A discloses the use of perovskites as reforming catalysts.

### [Detailed Description of the Invention]

### [Technical Problem]

The present application has been made in an effort to provide a catalyst for methane reformation and a method for preparing the same.

### [Technical Solution]

The present application provides a catalyst for methane reformation, consisting of:
a porous metal support; and
a perovskite-based catalyst component supported on the porous metal support and represented by the following Chemical Formula 1, wherein the porous metal support is composed of one or more selected among NiFeCrAl, NiCrAl, stainless steel and Inconel:

   [Chemical Formula 1] Sr₁₋ₓAₓTi_{1-y}B_{y}O_{3-δ}

In Chemical Formula 1,
A is Y, La or Ba,
B is Ni, Co, Fe, Mn, Cr, Mo, Ru or Rh,
x is a real number of 0 or more and less than 1,
y is a real number of more than 0 and less than 0.5, and
δ is a real number of more than 0 and less than 1.

In addition, the present application provides a method for producing a catalyst for methane reformation, the method comprising:
preparing a solution comprising a precursor of the perovskite-based catalyst component represented by Chemical Formula 1;
coating a porous metal support with the solution comprising the precursor of the perovskite-based catalyst component; and
drying and firing the porous metal support, wherein the porous metal support is composed of one or more selected among NiFeCrAl, NiCrAl, stainless steel and inconel.
Further embodiments are disclosed in the dependent claims.

### [Advantageous Effects]

The catalyst for methane reformation according to an exemplary embodiment of the present application can be formed in the form of perovskite nanoparticles by directly coating a porous metal support with the perovskite-based catalyst component represented by Chemical Formula 1 without an additional binder. Accordingly, the catalyst is characterized in that the active surface area of the catalyst for methane reformation can be increased.

Further, the catalyst for methane reformation according to an exemplary embodiment of the present application is characterized by being capable of exhibiting good activity even at high space velocity during methane reforming reaction and being stably driven for a long period of time without carbon deposition or a sintering phenomenon because a catalyst component is directly supported on a porous metal support having high thermal conductivity.

### [Brief Description of Drawings]

FIG. 1 is a view illustrating a set of electron microscope photographs of the surface of the catalyst for methane reformation according to Example 1 of the present application.
FIG. 2 is a view illustrating an electron microscope photograph of the cross section of the catalyst for methane reformation according to Example 1 of the present application.
FIG. 3 is a view illustrating a set of electron microscope photographs of the surface of the catalyst according to Example 22 (not according to the invention).
FIG. 4 is a view illustrating an electron microscope photograph of the surface of the catalyst according to Comparative Example 12 of the present application.

### [Best Mode]

Hereinafter, the present specification will be described in more detail.

When one member is disposed "on" another member in the present specification, this comprises not only a case where the one member is brought into contact with another member, but also a case where still another member is present between the two members.

When one part "comprises" one constituent element in the present specification, unless otherwise specifically described, this does not mean that another constituent element is excluded, but means that another constituent element may be further comprised.

Currently, in the case of catalysts which are widely used in the field of reformers, generally, powder-type catalysts and pellet-type support catalysts are usually used. Although the powder-type catalysts may have excellent performance due to excellent dispersion degree of the catalyst, it is difficult to directly use the powder-type catalyst in the industry. For example, when a reformer is driven using the powder-type catalyst, the catalyst comes out together with a material produced after the reaction, and in this case, the catalyst in the form of a powder gradually accumulates in the stream tube at the exit portion, and eventually, a phenomenon of blocking the entire tube may occur. Therefore, there is a disadvantage in that the powder-type catalysts cannot be used in the commercial reformers used in the industry.

In addition, the pellet-type support catalyst is currently frequently used in industrial reformers. Due to the limitation of the mass transfer rate, the performance deteriorates compared to the powder-type catalyst only in terms of the catalyst performance, but there is an advantage in that the pellet-type support catalyst can be used for a long period of time because a support is used. However, a γ-Al₂O₃ pellet, which is often used as the pellet-type support catalyst, has a weak structural strength, and thus may be easily broken, and accordingly, there is a disadvantage in that a differential pressure in the reactor is generated. Furthermore, since the volume is large due to the characteristics of the pellet-type support catalyst, the volume thereof becomes considerably large when the pellet-type support catalyst is used in a high-capacity reformer. Further, all reforming reactions are sensitive to reaction temperature, but the existing pellet-type catalyst has a disadvantage in that heat is not evenly distributed throughout the reactor due to a large reduction in thermal conductivity.

Thus, the present application intended to alleviate a phenomenon of blocking the stream tube, which is a disadvantage of the powder-type, and improve the heat and mass transfer rates which are a common disadvantage of the powder-type and the pellet-type, through a method of coating a porous metal support catalyst having high heat and mass transfer rates with a catalyst.

Thus, the present application has been made in an effort to provide a catalyst for methane reformation, which is capable of stably maintaining high activity for a long period of time.

The catalyst for methane reformation according to the present application consists of a porous metal support; and a perovskite-based catalyst component supported on the porous metal support and represented by the following Chemical Formula 1, wherein the porous metal support is composed of one or more selected among NiFeCrAl, NiCrAl, stainless steel and inconel:

[Chemical Formula 1] Sr₁₋ₓAₓTi_{1-y}B_{y}O_{3-δ}

In Chemical Formula 1,
A is Y, La or Ba,
B is Ni, Co, Fe, Mn, Cr, Mo, Ru or Rh,
x is a real number of 0 or more and less than 1,
y is a real number of more than 0 and less than 0.5, and
δ is a real number of more than 0 and less than 1.

In an exemplary embodiment of the present application, Chemical Formula 1 may be represented by the following Chemical Formula 2, but is not limited thereto.

[Chemical Formula 2] SrTi_{1-y}B_{y}O_{3-δ}

In Chemical Formula 2,
B is Ni, Co, Fe, Mn, Cr, Mo, Ru or Rh,
y is a real number of more than 0 and less than 0.5, and
δ is a real number of more than 0 and less than 1.

In an exemplary embodiment of the present application, Chemical Formula 1 may be represented by the following Chemical Formula 3 or 4, but is not limited thereto.

[Chemical Formula 3] SrTi_{1-y}Ni_{y}O_{3-δ}

[Chemical Formula 4] Sr₁₋ₓYₓTi_{1-y}Ni_{y}O_{3-δ}

In Chemical Formulae 3 and 4,
x is a real number of more than 0 and less than 1,
y is a real number of more than 0 and less than 0.5, and
δ is a real number of more than 0 and less than 1.

In the present application, the porous metal support is composed of one or more selected among NiFeCrAl, NiCrAl, stainless steel and inconel.

The porous metal support is a support having various shapes, has a small heat capacity and an excellent heat transfer ability, and thus may be molded into a desired shape for use. The form, size and the like of the porous metal support are not particularly limited, and the porous metal support may have a porosity of 10% to 99%, preferably 50% to 96%. In addition, the porous metal support may have an average pore size of 150 µm to 3,000 µm, 400 µm to 2,000 µm, and 600 µm to 1,700 µm. The porous metal support may be appropriately produced by those skilled in the art using methods known in the art, in consideration of the material, pore size, porosity, and the like of the porous metal support. According to an exemplary embodiment of the present application, a porous metal support having various materials, pore sizes, and the like may be applied as in Examples to be described below.

In an exemplary embodiment of the present application, a content of the perovskite-based catalyst component may be 3 wt% to 40 wt%, 6 wt% to 35 wt%, and 7 wt% to 30 wt%, based on a total weight of the catalyst for methane reformation. When the content of the perovskite-based catalyst component is less than 3 wt% based on the total weight of the catalyst for methane reformation, the reactivity may be lowered due to relatively few active sites on the catalyst surface, so the content is not preferred. Further, when the content of the catalyst component exceeds 40 wt%, a relatively large amount of the catalyst component is contained compared to the porous metal support, making it difficult to maintain the pore structure, it may not be easy to bond the catalyst component to the porous metal support, and accordingly, the practical benefits of the methane reforming reaction may be reduced.

The catalyst for methane reformation according to an exemplary embodiment of the present application can be formed in the form of perovskite nanoparticles by directly coating a porous metal support with the perovskite-based catalyst component represented by Chemical Formula 1 without a separate binder. Accordingly, the catalyst is characterized in that the active surface area of the catalyst for methane reformation can be increased.

In an exemplary embodiment of the present application, the catalyst for methane reformation may be applied to a steam reforming process, a carbon dioxide (CO₂) reforming process, a catalytic partial oxidation process, an autothermal reforming process, a tri-reforming process or a mixed reforming process, and the methane reforming process is not particularly limited.

In addition, in the present application, a porous metal support such as a metal foam with low pressure drop was applied as a support for the catalyst because the porous metal support has no problem of an increase in weight due to its mechanical strength similar to that of honeycomb or pellet carriers and low apparent density so as to be applied to high-temperature catalytic reactions, and has excellent porosity. Furthermore, in order to stably introduce catalyst components into the porous metal support, a metal oxide catalyst having a coefficient of thermal expansion (CTE) value similar to that of the porous metal support was supported.

The coefficient of thermal expansion value may be measured using methods known in the art. More specifically, the coefficient of thermal expansion value may be measured using a thermal mechanical analyzer (TMA), a dilatometer, and the like. A TMA or dilatometer is an apparatus that measures the changes in size and volume of a sample as a function of time, temperature, and force.

The catalyst according to an exemplary embodiment of the present application may be applied to the reforming reaction, cracking reaction, oxidation reaction, partial oxidation reaction or hydrogenation reaction of hydrocarbons, but is not limited thereto.

In particular, the catalyst according to an exemplary embodiment of the present application may be applied to a reforming reaction of methane, and the reforming reaction of methane may comprise a steam reforming process, a carbon dioxide (CO₂) reforming process, a catalytic partial oxidation process, an autothermal reforming process, a tri-reforming process or a mixed reforming process.

The method for producing a catalyst for methane reformation according to an exemplary embodiment of the present application comprises: preparing a solution comprising a precursor of the perovskite-based catalyst component represented by Chemical Formula 1; coating a porous metal support with the solution comprising the precursor of the perovskite-based catalyst component; and drying and firing the porous metal support, wherein the porous metal support is composed of one or more selected among NiFeCrAl, NiCrAl, stainless steel and inconel.

In the method for producing a catalyst for methane reformation according to an exemplary embodiment of the present application, details on the porous metal support, the perovskite-based catalyst component, and the like are the same as those described above.

In particular, in the method for producing a catalyst for methane reformation according to an exemplary embodiment of the present application, a porous metal support may be directly coated with a perovskite-based catalyst component without an additional binder.

The method for producing a catalyst for methane reformation according to an exemplary embodiment of the present application comprises preparing a solution comprising a precursor of the perovskite-based catalyst component represented by Chemical Formula 1.

The precursor of the perovskite-based catalyst component is a precursor of the metal constituting the perovskite-based catalyst component represented by Chemical Formula 1, and the metal molar ratio of the perovskite-based catalyst component represented by Chemical Formula 1 may be adjusted by adjusting the content thereof. Furthermore, the precursor of the metal is not particularly limited, and ammonium salts, nitrates, carbonates, chlorides of the metal elements, or mixtures thereof may be applied in combination.

The method for producing a catalyst for methane reformation according to an exemplary embodiment of the present application comprises coating a porous metal support with the solution comprising the precursor of the perovskite-based catalyst component. As the coating method, methods known in the art may be used, and dip-coating, wash-coating and the like may be used, but the method is not limited thereto.

The method for producing a catalyst for methane reformation according to an exemplary embodiment of the present application comprises drying and firing the porous metal support after the coating of the porous metal support with the solution comprising the precursor of the perovskite-based catalyst component. The drying may be performed at a temperature of 50°C to 200°C for 1 hour to 48 hours, and may be performed at a temperature of 60°C to 150°C for 5 hours to 36 hours, but is not limited thereto. Further, the firing may be performed at a temperature of 350°C to 1100°C for 1 hour to 10 hours in an air atmosphere, and may be performed at a temperature of 500°C to 1,000°C for 1.5 hours to 8 hours in an air atmosphere, but is not limited thereto.

In an exemplary embodiment of the present application, the method may further comprise measuring the weight of the catalyst supported on the porous metal support after the drying and firing. In addition, by measuring the weight of the catalyst supported on the porous metal support, the coating of the above-described porous metal support with the solution comprising the precursor of the perovskite-based catalyst component; and the drying and firing of the porous metal support may be performed repeatedly once to 20 times until a desired amount of catalyst is supported on the porous metal support.

The catalyst for methane reformation according to an exemplary embodiment of the present application is characterized by being capable of exhibiting good activity even at high space velocity during methane reforming reaction and being stably driven for a long period of time without carbon deposition or a sintering phenomenon because a catalyst component is supported on a porous metal support having high thermal conductivity.

### [Mode for Invention]

Hereinafter, the present application will be described in detail with reference to Examples for specifically describing the present application. The Examples of the present application are provided for more completely explaining the present application to the person with ordinary skill in the art.

### <Examples>

### <Example 1> SrTi_{0.97}Ni_{0.03}O_{3-δ} / NiCrAl

A solution comprising a precursor of a perovskite catalyst component was prepared by the citrate method. Strontium nitrate (Sr(NO₃)₃H₂O) and nickel nitrate (Ni(NO₃)₂) were dissolved in distilled water together with citric acid and ethylene glycol. After titanium isopropoxide (Ti(OCH(CH₃)₂)₄) was dissolved in ethanol, the two solutions were mixed at 70°C. Thereafter, after the mixture was stirred for 3 hours, the mixture was cooled to room temperature and stored. In this case, the concentration of the solution was 0.1 M, and nickel was comprised in an amount of 3 mol% relative to titanium.

A porous metal support (NiCrAl, average pore size: 1,200 µm) was dip-coated so as to be impregnated with the solution comprising the precursor of the perovskite catalyst component prepared above, and then dried at 150°C for 24 hours, and heat-treated at 900°C in an air atmosphere for 3 hours. This process was repeated several times to finally produce a catalyst in which SrTi_{0.97}Ni_{0.03}O_{3-δ} (0 < δ < 1) was supported on a porous metal support. In this case, the amount of SrTi_{0.97}Ni_{0.03}O_{3-δ} (0 < δ < 1) supported was 10 wt% based on the total weight of the catalyst.

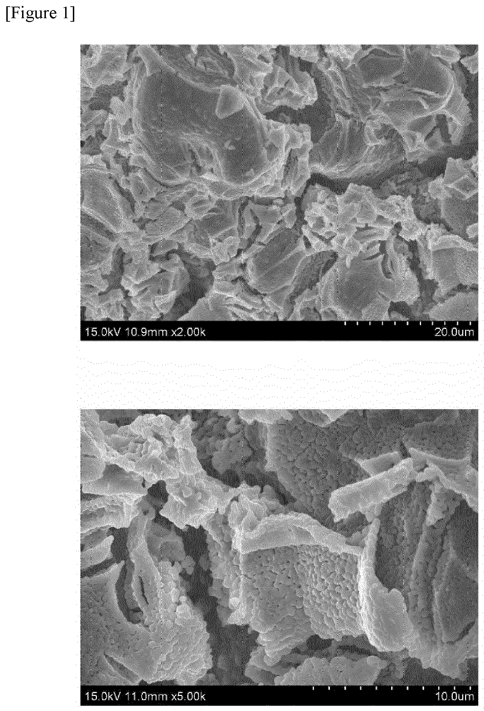

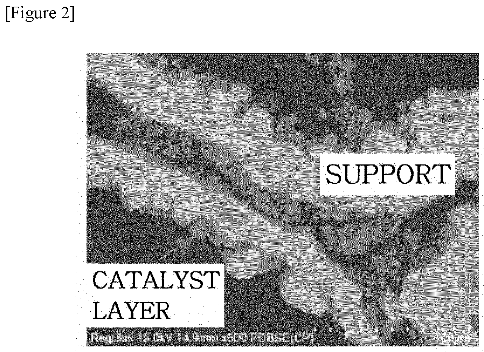

A set of electron microscope photographs of the surface of the catalyst for methane reformation according to Example 1 of the present application is illustrated in the following FIG. 1. In addition, an electron microscope photograph of the cross section of the catalyst for methane reformation according to Example 1 of the present application is illustrated in the following FIG. 2.

The amount of catalyst supported may be calculated by the following Equation 1. [Equation 1] 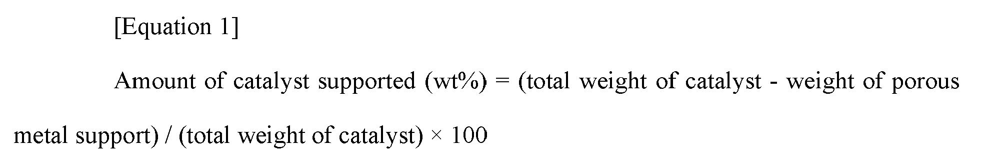 Amount of catalyst supported (wt%) = (total weight of catalyst - weight of porous metal support) / (total weight of catalyst) × 100

### <Example 2> SrTi_{0.95}Ni_{0.05}O_{3-δ} / NiCrAl

A catalyst in which SrTi_{0.95}Ni_{0.05}O_{3-δ} (0 < δ < 1) was supported on a porous metal support was produced in the same manner as in Example 1, except that the porous metal support was used by increasing the content of nickel to 5 mol% relative to titanium. In this case, the amount of SrTi_{0.95}Ni_{0.05}O_{3-δ} (0 < δ < 1) supported was 10 wt% based on the total weight of the catalyst.

### <Example 3> SrTi_{0.90}Ni_{0.10}O_{3-δ} / NiCrAl

A catalyst in which SrTi_{0.90}Ni_{0.10}O_{3-δ} (0 < δ < 1) was supported on a porous metal support was produced in the same manner as in Example 1, except that the porous metal support was used by increasing the content of nickel to 10 mol% relative to titanium. In this case, the amount of SrTi_{0.90}Ni_{0.10}O_{3-δ} (0 < δ < 1) supported was 10 wt% based on the total weight of the catalyst.

### <Example 4> SrTi_{0.85}Ni_{0.15}O_{3-δ} / NiCrAl

A catalyst in which SrTi_{0.85}Ni_{0.15}O_{3-δ} (0 < δ < 1) was supported on a porous metal support was produced in the same manner as in Example 1, except that the porous metal support was used by increasing the content of nickel to 15 mol% relative to titanium. In this **case, the** amount of SrTi_{0.85}Ni_{0.15}O_{3-δ} (0 < δ < 1) supported was 10 wt% based on the total weight of the catalyst.

### <Example 5> SrTi_{0.80}Ni_{0.20}O_{3-δ} / NiCrAl

A catalyst in which SrTi_{0.80}Ni_{0.20}O_{3-δ} (0 < δ < 1) was supported on a porous metal support was produced in the same manner as in Example 1, except that the porous metal support was used by increasing the content of nickel to 20 mol% relative to titanium. In this case, the amount of SrTi_{0.80}Ni_{0.20}O_{3-δ} (0 < δ < 1) supported was 10 wt% based on the total weight of the catalyst.

### <Example 6> Sr_{0.92}Y_{0.08}Ti_{0.97}Ni_{0.03}O_{3-δ} / NiCrAl

A catalyst in which Sr_{0.92}Y_{0.08}Ti_{0.97}Ni_{0.03}O_{3-δ} (0 < δ < 1) was supported on a porous metal support was produced in the same manner as in Example 1, except that the porous metal support was used by adding yttrium nitrate (Y(NO₃)₂) in an amount of 8 mol% relative to strontium. In this case, the amount of Sr_{0.92}Y_{0.08}Ti_{0.97}Ni_{0.03}O_{3-δ} (0 < δ < 1) supported was 10 wt% based on the total weight of the catalyst.

### <Example 7> Sr_{0.92}Y_{0.08}Ti_{0.95}Ni_{0.05}O_{3-δ} / NiCrAl

A catalyst in which Sr_{0.92}Y_{0.08}Ti_{0.95}Ni_{0.05}O_{3-δ} (0 < δ < 1) was supported on a porous metal support was produced in the same manner as in Example 6, except that the porous metal support was used by increasing the content of nickel to 5 mol% to titanium. In this case, the amount of Sr_{0.92}Y_{0.08}Ti_{0.95}Ni_{0.05}O_{3-δ} (0 < δ < 1) supported was 10 wt% based on the total weight of the catalyst.

### <Example 8> Sr_{0.92}Y_{0.08}Ti_{0.90}Ni_{0.10}O_{3-δ} / NiCrAl

A catalyst in which Sr_{0.92}Y_{0.08}Ti_{0.90}Ni_{0.10}O_{3-δ} (0 < δ < 1) was supported on a porous metal support was produced in the same manner as in Example 6, except that the porous metal support was used by increasing the content of nickel to 10 mol% to titanium. In this case, the amount of Sr_{0.92}Y_{0.08}Ti_{0.90}Ni_{0.10}O_{3-δ} (0 < δ < 1) supported was 10 wt% based on the total weight of the catalyst.

### <Example 9> Sr_{0.92}Y_{0.08}Ti_{0.85}Ni_{0.15}O_{3-δ} / NiCrAl

A catalyst in which Sr_{0.92}Y_{0.08}Ti_{0.85}Ni_{0.15}O_{3-δ} (0 < δ < 1) was supported on a porous metal support was produced in the same manner as in Example 6, except that the porous metal support was used by increasing the content of nickel to 15 mol% to titanium. In this case, the amount of Sr_{0.92}Y_{0.08}Ti_{0.85}Ni_{0.15}O_{3-δ} (0 < δ < 1) supported was 10 wt% based on the total weight of the catalyst.

### <Example 10> Sr_{0.92}Y_{0.08}Ti_{0.80}Ni_{0.20}O_{3-δ} / NiCrAl

A catalyst in which Sr_{0.92}Y_{0.08}Ti_{0.80}Ni_{0.20}O_{3-δ} (0 < δ < 1) was supported on a porous metal support was produced in the same manner as in Example 6, except that the porous metal support was used by increasing the content of nickel to 20 mol% to titanium. In this case, the amount of Sr_{0.92}Y_{0.08}Ti_{0.80}Ni_{0.20}O_{3-δ} (0 < δ < 1) supported was 10 wt% based on the total weight of the catalyst.

### <Example 11> Sr_{0.96}Y_{0.04}Ti_{0.80}Ni_{0.20}O_{3-δ} / NiCrAl

A catalyst in which Sr_{0.96}Y_{0.04}Ti_{0.80}Ni_{0.20}O_{3-δ} (0 < δ < 1) was supported on a porous metal support was produced in the same manner as in Example 10, except that the porous metal support was used by adding yttrium nitrate (Y(NO₃)₂) in an amount of 4 mol% relative to strontium. In this case, the amount of Sr_{0.96}Y_{0.04}Ti_{0.80}Ni_{0.20}O_{3-δ} (0 < δ < 1) supported was 10 wt% based on the total weight of the catalyst.

### <Example 12> Sr_{0.88}Y_{0.12}Ti_{0.80}Ni_{0.20}O_{3-δ} / NiCrAl

A catalyst in which Sr_{0.88}Y_{0.12}Ti_{0.80}Ni_{0.20}O_{3-δ} (0 < δ < 1) was supported on a porous metal support was produced in the same manner as in Example 10, except that the porous metal support was used by increasing the content of yttrium nitrate (Y(NO₃)₂) to 12 mol% relative to strontium. In this case, the amount of Sr_{0.88}Y_{0.12}Ti_{0.80}Ni_{0.20}O_{3-δ} (0 < δ < 1) supported was 10 wt% based on the total weight of the catalyst.

### <Example 13> Sr_{0.84}Y_{0.16}Ti_{0.80}Ni_{0.20}O_{3-δ} / NiCrAl

A catalyst in which Sr_{0.84}Y_{0.16}Ti_{0.80}Ni_{0.20}O_{3-δ} (0 < δ < 1) was supported on a porous metal support was produced in the same manner as in Example 10, except that the porous metal support was used by increasing the content of yttrium nitrate (Y(NO₃)₂) to 16 mol% relative to strontium. In this case, the amount of Sr_{0.84}Y_{0.16}Ti_{0.80}Ni_{0.20}O_{3-δ} (0 < δ < 1) supported was 10 wt% based on the total weight of the catalyst.

### <Example 14> Sr_{0.92}Y_{0.08}Ti_{0.90}Ru_{0.10}O_{3-δ} / NiCrAl

A catalyst in which Sr_{0.92}Y_{0.08}Ti_{0.90}Ru_{0.10}O_{3-δ} (0 < δ < 1) was supported on a porous metal support was produced in the same manner as in Example 8, except that ruthenium chloride (RuCl₃) was used in an amount of 10 mol% relative to titanium instead of nickel nitrate (Ni(NO₃)₂). In this case, the amount of Sr_{0.92}Y_{0.08}Ti_{0.90}Ru_{0.10}O_{3-δ} (0 < δ < 1) supported was 10 wt% based on the total weight of the catalyst.

### <Example 15> Sr_{0.92}Y_{0.08}Ti_{0.85}Ru_{0.15}O_{3-δ} / NiCrAl

A catalyst in which Sr_{0.92}Y_{0.08}Ti_{0.85}Ru_{0.15}O_{3-δ} (0 < δ < 1) was supported on a porous metal support was produced in the same manner as in Example 14, except that the porous metal support was used by increasing the content of ruthenium chloride (RuCl₃) to 15 mol% relative to titanium. In this case, the amount of Sr_{0.92}Y_{0.08}Ti_{0.85}Ru_{0.15}O_{3-δ} (0 < δ < 1) supported was 10 wt% based on the total weight of the catalyst.

### <Example 16> Sr_{0.92}Y_{0.08}Ti_{0.80}Ru_{0.20}O_{3-δ} / NiCrAl

A catalyst in which Sr_{0.92}Y_{0.08}Ti_{0.80}Ru_{0.20}O_{3-δ} (0 < δ < 1) was supported on a porous metal support was produced in the same manner as in Example 14, except that the porous metal support was used by increasing the content of ruthenium chloride (RuCl₃) to 20 mol% relative to titanium. In this case, the amount of Sr_{0.92}Y_{0.08}Ti_{0.80}Ru_{0.20}O_{3-δ} (0 < δ < 1) supported was 10 wt% based on the total weight of the catalyst.

### <Example 17> Sr_{0.92}Y_{0.08}Ti_{0.80}Ni_{0.20}O_{3-δ} / NiCrAl_800

A catalyst in which Sr_{0.92}Y_{0.08}Ti_{0.80}Ni_{0.20}O_{3-δ} (0 < δ < 1) was supported on a porous metal support was produced in the same manner as in Example 10, except that as the porous metal support, NiCrAl_800 (average pore size: 800 µm) was used instead of NiCrAl (average pore size: 1,200 µm). In this case, the amount of Sr_{0.92}Y_{0.08}Ti_{0.80}Ni_{0.20}O_{3-δ} (0 < δ < 1) supported was 10 wt% based on the total weight of the catalyst.

### <Example 18> Sr_{0.92}Y_{0.08}Ti_{0.80}Ni_{0.20}O_{3-δ} / NiCrAl_1500

A catalyst in which Sr_{0.92}Y_{0.08}Ti_{0.80}Ni_{0.20}O_{3-δ} (0 < δ < 1) was supported on a porous metal support was produced in the same manner as in Example 10, except that as the porous metal support, NiCrAl_1500 (average pore size: 1,500 µm) was used instead of NiCrAl (average pore size: 1,200 µm). In this case, the amount of Sr_{0.92}Y_{0.08}Ti_{0.80}Ni_{0.20}O_{3-δ} (0 < δ < 1) supported was 10 wt% based on the total weight of the catalyst.

### <Example 19> Sr_{0.92}Y_{0.08}Ti_{0.80}Ni_{0.20}O_{3-δ} / NiFeCrAl

A catalyst in which Sr_{0.92}Y_{0.08}Ti_{0.80}Ni_{0.20}O_{3-δ} (0 < δ < 1) was supported on a porous metal support was produced in the same manner as in Example 10, except that as the porous metal support, NiFeCrAl (average pore size: 1,200 µm) was used instead of NiCrAl (average pore size: 1,200 µm). In this case, the amount of Sr_{0.92}Y_{0.08}Ti_{0.80}Ni_{0.20}O_{3-δ} (0 < δ < 1) supported was 10 wt% based on the total weight of the catalyst.

### <Example 20> Sr_{0.92}Y_{0.08}Ti_{0.80}Ru_{0.20}O_{3-δ} / NiFeCrAl

A catalyst in which Sr_{0.92}Y_{0.08}Ti_{0.80}Ru_{0.20}O_{3-δ} (0 < δ < 1) was supported on a porous metal support was produced in the same manner as in Example 16, except that as the porous metal support, NiFeCrAl (average pore size: 1,200 µm) was used instead of NiCrAl (average pore size: 1,200 µm). In this case, the amount of Sr_{0.92}Y_{0.08}Ti_{0.80}Ru_{0.20}O_{3-δ} (0 < δ < 1) supported was 10 wt% based on the total weight of the catalyst.

### <Comparative Example 1> SrTi_{0.97}Ni_{0.03}O_{3-δ} / Al₂O₃

A catalyst in which SrTi_{0.97}Ni_{0.03}O_{3-δ} (0 < δ < 1) was supported on Al₂O₃ was produced in the same manner as in Example 1, except that as the support, Al₂O₃ was used instead of the porous metal support (NiCrAl). In this case, the amount of SrTi_{0.97}Ni_{0.03}O_{3-δ} (0 < δ < 1) supported was 10 wt% based on the total weight of the catalyst.

### <Comparative Example 2> Sr_{0.92}Y_{0.08}Ti_{0.97}Ni_{0.03}O_{3-δ} / Al₂O₃

A catalyst in which Sr_{0.92}Y_{0.08}Ti_{0.97}Ni_{0.03}O_{3-δ} (0 < δ < 1) was supported on Al₂O₃ was produced in the same manner as in Example 6, except that as the support, Al₂O₃ was used instead of the porous metal support (NiCrAl). In this case, the amount of Sr_{0.92}Y_{0.08}Ti_{0.97}Ni_{0.03}O_{3-δ} (0 < δ < 1) supported was 10 wt% based on the total weight of the catalyst.

### <Comparative Example 3> SrTi_{0.97}Ni_{0.03}O_{3-δ} (powder)

Strontium nitrate (Sr(NO₃)₃H₂O) and nickel nitrate (Ni(NO₃)₂) were dissolved in distilled water together with citric acid and ethylene glycol. After titanium isopropoxide (Ti(OCH(CH₃)₂)₄) was dissolved in ethanol, the two solutions were mixed at 70°C. After the resulting mixture was stirred for 30 minutes, the mixture was warmed to 100°C and stirred for 3 hours. In this case, the concentration of the solution was 0.1 M, and nickel was comprised in an amount of 3 mol% relative to titanium. Thereafter, the solution was warmed to 150°C and dried for 24 hours. The dried body was heat-treated at 350°C in an air atmosphere for 3 hours, and then ground. Thereafter, a heat treatment was performed again at 900°C in an air atmosphere for 3 hours. Finally, a SrTi_{0.97}Ni_{0.03}O_{3-δ} (0 < δ < 1) catalyst in the form of a powder was produced.

### <Comparative Example 4> Sr_{0.92}Y_{0.08}Ti_{0.97}Ni_{0.03}O_{3-δ} (powder)

A Sr_{0.92}Y_{0.08}Ti_{0.97}Ni_{0.03}O_{3-δ} (0 < δ < 1) catalyst in the form of a powder was finally produced in the same manner as in Comparative Example 3, except that yttrium nitrate (Y(NO₃)₂) was additionally used in an amount of 8 mol% relative to strontium.

### <Comparative Example 5>

A porous metal support (NiCrAl, average pore size: 1,200 µm) alone was used as Comparative Example 5.

### <Comparative Example 6>

A porous metal support (NiFeCrAl, average pore size: 1,200 µm) alone was used as Comparative Example 6.

### <Comparative Example 7> SrTi_{0.97}Ni_{0.03}O_{3-δ} / Al₂O₃ / NiCrAl

A first solution was prepared so as to have 15 wt% of Al₂O₃ using an Al₂O₃ dispersion solution.

A solution comprising a precursor of the perovskite catalyst component was prepared in the same manner as in Example 1, and named a second solution.

A porous metal support (NiCrAl, average pore size: 1,200 µm) was dip-coated so as to be impregnated with the first solution, and then dried at 150°C for 24 hours, and heat-treated at 900°C in an air atmosphere for 3 hours. Thereafter, a porous metal support supported by Al₂O₃ of the first solution was dip-coated so as to be impregnated with the second solution, and then dried at 150°C for 24 hours, and heat-treated at 900°C in an air atmosphere for 3 hours. This process was repeated several times to finally produce a catalyst in which Al₂O₃ and SrTi_{0.97}Ni_{0.03}O_{3-δ} (0 < δ < 1) were supported on a porous metal support. In this case, the amount of SrTi_{0.97}Ni_{0.03}O_{3-δ} (0 < δ < 1) supported was 10 wt% based on the total weight of the catalyst.

### <Comparative Example 8> SrTi_{0.97}Ni_{0.03}O_{3-δ} / Methyl Cellulose / NiCrAl

An experiment was performed in the same manner as in Comparative Example 7, except that methyl cellulose was used instead of Al₂O₃ during the preparation of the first solution.

### <Experimental Example 1> Evaluation of reforming reaction of methane

A fixed-bed reactor system was introduced to carry out a dry reforming reaction of methane. A Quartz tube reactor (inner diameter = 1.27 cm (0.5 inch), length = 50 cm) was used to pack the reactor with each catalyst (about 2.5 g) of the Examples and the Comparative Examples. First, after the catalyst underwent a reduction process 800°C under 10% H₂/N₂ conditions for 2 hours, a catalytic reaction was performed for 100 hours.
Gas composition: CH₄ : CO₂ : N₂ = 1 : 1.2 : 0.96
Flow rate: weight hour space velocity (WHSV) = 30,000 h⁻¹
Reaction temperature: 800°C
Reaction pressure: 1 bar

A reaction conversion rate after 100 hours of reaction was calculated by analyzing the composition of the produced gas using gas chromatography (GC), and is shown in the following Table 1. $Conversion rate \left(Xi, %\right) = \left[\left({Fi}_{in}-{Fi}_{out}\right)/{Fi}_{in}\right] \times 100 \left(Fi=flow rate of i\right)$

### <GC analysis conditions>

1) GC model: Agilent 6890
2) Oven temp.: 40°C/7 min-90°C/5 min-180°C/6 min
3) Detector: TCD, 250°C
4) Sample: 0.25 mL
5) Valve box Temp.: 150°C

**[Table 1]**

| Catalyst type | CH₄ conversion rate (%) | CO₂ conversion rate (%) | H₂/CO ratio |
|---|---|---|---|
| Example 1 | 88 | 89.2 | 0.87 |
| Example 2 | 89 | 90.3 | 0.87 |
| Example 3 | 90.2 | 90.3 | 0.89 |
| Example 4 | 94.1 | 92.8 | 0.91 |
| Example 5 | 92.1 | 90.9 | 0.89 |
| Example 6 | 61.3 | 71.5 | 0.76 |
| Example 7 | 68.3 | 78.3 | 0.76 |
| Example 8 | 82.7 | 87.5 | 0.87 |
| Example 9 | 92.3 | 90.8 | 0.89 |
| Example 10 | 93.9 | 92 | 0.91 |
| Example 11 | 90.5 | 89.9 | 0.88 |
| Example 12 | 93.5 | 91 | 0.89 |
| Example 13 | 88.7 | 89.2 | 0.87 |
| Example 14 | 89.7 | 88.9 | 0.88 |
| Example 15 | 92.5 | 88.9 | 0.92 |
| Example 16 | 93.2 | 90.8 | 0.92 |
| Example 17 | 90.9 | 90.1 | 0.89 |
| Example 18 | 92.8 | 91.1 | 0.90 |
| Example 19 | 88.4 | 89.1 | 0.87 |
| Example 20 | 87.8 | 89.8 | 0.88 |
| Comparative Example 1 | 44 | 61.2 | 0.64 |
| Comparative Example 2 | 40.9 | 58 | 0.6 |
| Comparative Example 3 | 43.5 | 45.2 | 0.69 |
| Comparative Example 4 | 37.2 | 42.3 | 0.67 |
| Comparative Example 5 | 56 | 65 | 0.79 |
| Comparative Example 6 | 41 | 53 | 0.65 |
| Comparative Example 7 | 44 | 61 | 0.64 |
| Comparative Example 8 | 40.2 | 54 | 0.62 |

As in the above results, it can be confirmed that when the Examples are compared with the Comparative Examples, the catalyst for methane reformation, which is composed of the porous metal support according to the present invention and the perovskite-based catalyst component represented by Chemical Formula 1, has excellent CH₄ conversion rate and CO₂ conversion rate compared to catalysts to which Al₂O₃ in the related art is applied as a support (Comparative Examples 1 and 2), catalysts to which the perovskite-based catalyst component is applied alone (Comparative Examples 3 and 4) and catalyst to which the porous metal support is applied alone (Comparative Examples 5 and 6). This can be seen as an effect of maximizing the active surface using a porous metal support and minimizing carbon deposition by supporting a perovskite-based catalyst component.

Furthermore, it can be confirmed that a catalyst obtained by additionally supporting a catalyst to which Al₂O₃ in the related art is applied as a support on a porous metal support (Comparative Example 7) and a catalyst in which a perovskite-based catalyst component is supported on a porous metal support using an organic binder such as methyl cellulose (Comparative Example 8) also have remarkably low CH₄ conversion rate and CO₂ conversion rate compared to the catalyst for methane reformation according to the present invention.

Therefore, the catalyst for methane reformation according to an exemplary embodiment of the present application can be formed in the form of perovskite nanoparticles by directly coating a porous metal support with the perovskite-based catalyst component represented by Chemical Formula 1 without an additional binder. Accordingly, the catalyst is characterized in that the active surface area of the catalyst for methane reformation can be increased.

Further, the catalyst for methane reformation according to an exemplary embodiment of the present application is characterized by being capable of exhibiting good activity even at high space velocity during methane reforming reaction and being stably driven for a long period of time without carbon deposition or a sintering phenomenon because a catalyst component is supported on a porous metal support having high thermal conductivity.

### <Example 21> SrTi_{0.97}Ni_{0.03}O_{3-δ} / NiCrAl (not according to the invention)

A precursor solution of a metal oxide catalyst was prepared by the citrate method (Pechini method). Strontium nitrate (Sr(NO₃)₃H₂O) and nickel nitrate (Ni(NO₃)₂) were dissolved in distilled water along with citric acid. After titanium isopropoxide (Ti(OCH(CH₃)₂)₄) was dissolved in ethylene glycol, the two solutions were mixed at 70°C to 90°C. Thereafter, after a clear solution was obtained, the solution was cooled to room temperature and stored. In this case, the concentration of the solution was 0.1 M, and nickel was comprised in an amount of 3 mol% relative to titanium.

A porous metal support (NiCrAl, cell size: 1,200 µm) was coated so as to be impregnated with the precursor solution of the metal oxide catalyst prepared above, and then dried at 70°C for 24 hours, and heat-treated at 900°C in an air atmosphere for 3 hours. This process was repeated several times to finally produce a catalyst in which SrTi_{0.97}Ni_{0.03}O_{3-δ} (0 < δ < 1) was supported on a porous metal support. In this case, the amount of SrTi_{0.97}Ni_{0.03}O_{3-δ} (0 < δ < 1) supported was 15 wt% based on the total weight of the catalyst.

The amount of catalyst supported may be calculated by the following Equation 1. [Equation 1] 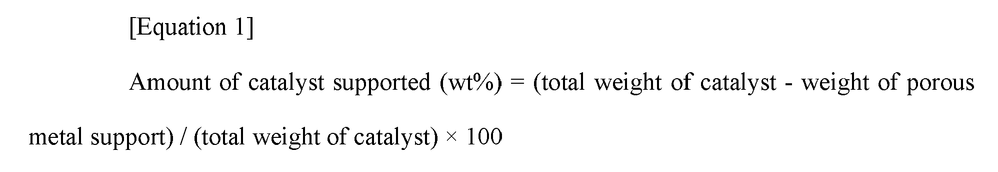 Amount of catalyst supported (wt%) = (total weight of catalyst - weight of porous metal support) / (total weight of catalyst) × 100

### <Example 22> Sr_{0.92}Y_{0.08}Ti_{0.85}Ni_{0.15}O_{3-δ} / NiCrAl (not according to the invention)

A catalyst in which Sr_{0.92}Y_{0.08}Ti_{0.85}Ni_{0.15}O_{3-δ} (0 < δ < 1) was supported on a porous metal support was produced in the same manner as in Example 21, except that the porous metal support was used by adding yttrium nitrate (Y(NO₃)₂) in an amount of 8 mol% relative to strontium and increasing the content of nickel to 15 mol% relative to titanium. In this case, the amount of Sr_{0.92}Y_{0.08}Ti_{0.85}Ni_{0.15}O_{3-δ} (0 < δ < 1) supported was 15 wt% based on the total weight of the catalyst.

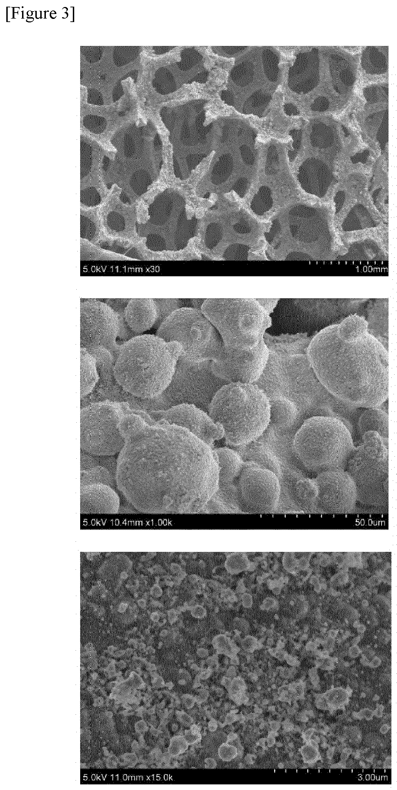

A set of electron microscope photographs of the surface of the catalyst according to Example 22 is illustrated in the following FIG. 3.

### <Example 23> Sr_{0.92}Y_{0.08}Ti_{0.85}Ru_{0.15}O_{3-δ} / NiCrAl (not according to the invention)

A catalyst in which Sr_{0.92}Y_{0.08}Ti_{0.85}Ru_{0.15}O_{3-δ} (0 < δ < 1) was supported on a porous metal support was produced in the same manner as in Example 21, except that yttrium nitrate (Y(NO₃)₂) was added in an amount of 8 mol% relative to strontium, and ruthenium chloride (RuCl₃) was used in an amount of 15 mol% relative to titanium instead of nickel nitrate (Ni(NO₃)₂). In this case, the amount of Sr_{0.92}Y_{0.08}Ti_{0.85}Ru_{0.15}O_{3-δ} (0 < δ < 1) supported was 15 wt% based on the total weight of the catalyst.

### <Comparative Example 9> SrTi_{0.97}Ni_{0.03}O_{3-δ} / Al₂O₃

A catalyst in which SrTi_{0.97}Ni_{0.03}O_{3-δ} (0 < δ < 1) was supported on Al₂O₃ was produced in the same manner as in Example 21, except that as the support, Al₂O₃ was applied instead of the porous metal support (NiCrAl, cell size: 1,200 µm). In this case, the amount of SrTi_{0.97}Ni_{0.03}O_{3-δ} (0 < δ < 1) supported was 15 wt% based on the total weight of the catalyst.

### <Comparative Example 10> Sr_{0.92}Y_{0.08}Ti_{0.85}Ni_{0.15}O_{3-δ} / Al₂O₃

A catalyst in which Y_{0.08}Ti_{0.85}Ni_{0.15}O_{3-δ} (0 < δ < 1) was supported on Al₂O₃ was produced in the same manner as in Example 22, except that as the support, Al₂O₃ was applied instead of the porous metal support (NiCrAl, cell size: 1,200 µm). In this case, the amount of Sr_{0.92}Y_{0.08}Ti_{0.85}Ni_{0.15}O_{3-δ} (0 < δ < 1) supported was 15 wt% based on the total weight of the catalyst.

### <Comparative Example 11> SrTiO₃ / NiCrAl

A precursor solution of a metal oxide catalyst was prepared by the citrate method. Strontium nitrate (Sr(NO₃)₃H₂O) was dissolved in distilled water together with critic acid and ethylene glycol. After titanium isopropoxide (Ti(OCH(CH₃)₂)₄) was dissolved in ethanol, the two solutions were mixed at 70°C. Thereafter, after the mixture was stirred for 3 hours, the mixture was cooled to room temperature and stored. In this case, the concentration of the solution was 0.1 M.

A porous metal support (NiCrAl, cell size: 1,200 µm) was coated so as to be impregnated with the precursor solution of the metal oxide catalyst prepared above, and then dried at 70°C for 24 hours, and heat-treated at 900°C in an air atmosphere for 3 hours. This process was repeated several times to finally produce a catalyst in which SrTiO₃ was supported on a porous metal support. In this case, the amount of SrTiO₃ supported was 15 wt% based on the total weight of the catalyst.

### <Comparative Example 12> NiO₂ / Al₂O₃

After nickel nitrate (Ni(NO₃)₂) was dissolved in distilled water, NiO₂ was supported on an Al₂O₃ support using an incipient wetness method. In this case, the amount of NiO₂ supported was 15 wt% based on the total weight of the catalyst.

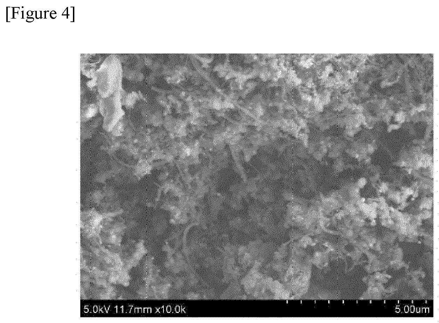

An electron microscope photograph of the surface of the catalyst according to Comparative Example 12 is illustrated in the following FIG. 4.

### <Comparative Example 13>

A porous metal support (NiCrAl, Cell size: 1,200 µm) alone was used as Comparative Example 13.

### <Experimental Example 2> Evaluation of coefficient of thermal expansion value

The coefficient of thermal expansion values of the supports and the metal oxide catalysts applied to Examples 21 to 23 and Comparative Examples 9 to 11 were measured, and are shown in the following Table 2.

The coefficient of thermal expansion values were measured under measurement conditions of load 0.1 N and N₂ flow 100 ml/min using TMA equipment (TA Instrument, Q400).

**[Table 2]**

| | Coefficient of thermal expansion value (10⁻⁶ / K) | | | | | | | | |
|---|---|---|---|---|---|---|---|---|---|
| | 600°C | | | 800°C | | | 900°C | | |
| | Support | Catalyst | Percentage | Support | Catalyst | Percentage | Support | Catalyst | Percentage |
| Example 21 | 14.4 | 12.3 | 85% | 15.0 | 13.2 | 88% | 15.4 | 13.3 | 86% |
| Example 22 | 14.4 | 12.3 | 85% | 15.0 | 13.4 | 89% | 15.4 | 13.5 | 88% |
| Example 23 | 14.4 | 12.4 | 86% | 15.0 | 13.3 | 89% | 15.4 | 13.4 | 87% |
| Comparative Example 9 | 9.5 | 12.3 | 129% | 9.6 | 13.2 | 138% | 9.8 | 13.3 | 136% |
| Comparative Example 10 | 9.5 | 12.3 | 129% | 9.6 | 13.4 | 140% | 9.8 | 13.5 | 138% |
| Comparative Example 11 | 14.4 | 11.1 | 77% | 15.0 | 12.2 | 81% | 15.4 | 12.7 | 82% |

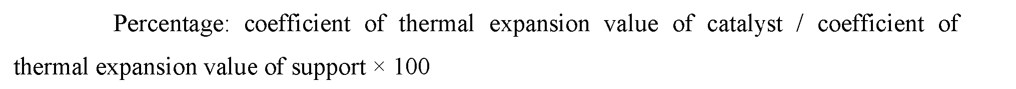

Percentage: coefficient of thermal expansion value of catalyst / coefficient of thermal expansion value of support × 100

### <Experimental Example 3> Evaluation of reforming solution of methane

A fixed-bed reactor system was introduced to carry out a dry reforming reaction of methane. A Quartz tube reactor (inner diameter = 1.27 cm (0.5 inch), length = 50 cm) was used to pack the reactor with each catalyst (about 2.5 g) of the Examples and the Comparative Examples. First, after the catalyst underwent a reduction process 800°C under 10% H₂/N₂ conditions for 2 hours, a catalytic reaction was performed for 100 hours.
Gas composition: CH₄ : CO₂ : N₂ = 1 : 1.12 : 0.96
Flow rate: gas hour space velocity (GHSV, based on CH₄) = 1,000 hr⁻¹ to 3,150 hr⁻¹
Reaction temperature: 800°C
Reaction pressure: 1 bar

A reaction conversion rate after 24 hours of reaction was calculated by analyzing the composition of the produced gas using gas chromatography (GC), and is shown in the following Table 3. $Conversion rate \left(Xi, %\right) = \left[\left({Fi}_{in}-{Fi}_{out}\right)/{Fi}_{in}\right] \times 100 \left(Fi=flow rate of i\right)$

### <GC analysis conditions>

1) GC model: Agilent 6890
2) Oven temp.: 40°C/7 min-90°C/5 min-180°C/6 min
3) Detector: TCD, 250°C
4) Sample: 0.25 mL
5) Valve box Temp.: 150°C

**[Table 3]**

| Catalyst type | GHSV(h⁻¹) | CH₄ conversion rate (%) | CO₂ conversion rate (%) |
|---|---|---|---|
| Example 21 | 1,000 | 85.9 | 87.2 |
| Example 21 | 1,500 | 78.3 | 82.7 |
| Example 22 | 1,000 | 94.6 | 92.4 |
| Example 22 | 1,500 | 91.3 | 92.9 |
| Example 23 | 1,000 | 93.8 | 91.0 |
| Example 23 | 1,500 | 87.2 | 86.8 |
| Comparative Example 9 | 1,480 | 43.3 | 60.4 |
| Comparative Example 10 | 1,450 | 72.1 | 78.3 |
| Comparative Example 11 | 3,000 | 10.0 | 11.0 |
| Comparative Example 12 | 3,150 | 53.6 | 58.0 |
| Comparative Example 13 | 1,400 | 32.3 | 42.3 |

As in the above results, it can be confirmed that the catalyst according to an exemplary embodiment of the present application has excellent methane conversion rate and CO₂ conversion rate during the reforming reaction of methane.

In the catalyst according to an exemplary embodiment of the present application, a metal oxide catalyst can be directly supported on a porous metal support without an additional additive by having a characteristic in which a coefficient of thermal expansion value of the metal oxide catalyst is 84% to 100% of a coefficient of thermal expansion value of the porous metal support at a temperature of 600°C or more.

Therefore, according to an exemplary embodiment of the present application, the catalyst can be driven without a reduction in activity of the catalyst even in a high-temperature hydrocarbon reaction for a long period of time, and can be stably driven without deposition of coke or a sintering phenomenon of the catalyst component even at high space velocity.

## Claims

1. A catalyst for methane reformation, consisting of:
a porous metal support; and
a perovskite-based catalyst component supported on the porous metal support and represented by the following Chemical Formula 1,
wherein the porous metal support is composed of one or more selected among NiFeCrAl, NiCrAl, stainless steel and inconel:
[Chemical Formula 1] Sr₁₋ₓAₓTi_{1-y}B_{y}O_{3-δ}
wherein, in Chemical Formula 1,
A is Y, La or Ba,
B is Ni, Co, Fe, Mn, Cr, Mo, Ru or Rh,
x is a real number of 0 or more and less than 1,
y is a real number of more than 0 and less than 0.5, and
δ is a real number of more than 0 and less than 1.

2. The catalyst of claim 1, wherein Chemical Formula 1 is represented by the following Chemical Formula 2:
[Chemical Formula 2] SrTi_{1-y}B_{y}O_{3-δ}
in Chemical Formula 2,
B is Ni, Co, Fe, Mn, Cr, Mo, Ru or Rh,
y is a real number of more than 0 and less than 0.5, and
δ is a real number of more than 0 and less than 1.

3. The catalyst of claim 1, wherein Chemical Formula 1 is represented by the following Chemical Formula 3 or 4:
[Chemical Formula 3] SrTi_{1-y}Ni_{y}O_{3-δ}
[Chemical Formula 4] Sr₁₋ₓYₓTi_{1-y}Ni_{y}O_{3-δ}
in Chemical Formulae 3 and 4,
x is a real number of more than 0 and less than 1,
y is a real number of more than 0 and less than 0.5, and
δ is a real number of more than 0 and less than 1.

4. The catalyst of claim 1, wherein a content of the perovskite-based catalyst component is 3 wt% to 40 wt% based on a total weight of the catalyst for methane reformation.

5. The catalyst of claim 1, wherein the catalyst for methane reformation is applied to a steam reforming process, a carbon dioxide (CO₂) reforming process, a catalytic partial oxidation process, an autothermal reforming process, a tri-reforming process or a mixed reforming process.

6. A method for producing a catalyst for methane reformation, the method comprising:
preparing a solution comprising a precursor of a perovskite-based catalyst component represented by the following Chemical Formula 1;
coating a porous metal support with the solution comprising the precursor of the perovskite-based catalyst component; and
drying and firing the porous metal support,
wherein the porous metal support is composed of one or more selected among NiFeCrAl, NiCrAl, stainless steel and inconel:
[Chemical Formula 1] Sr₁₋ₓAₓTi_{1-y}B_{y}O_{3-δ}
wherein, in Chemical Formula 1,
A is Y, La or Ba,
B is Ni, Co, Fe, Mn, Cr, Mo, Ru or Rh,
x is a real number of 0 or more and less than 1,
y is a real number of more than 0 and less than 0.5, and
δ is a real number of more than 0 and less than 1.

7. The method of claim 6, wherein Chemical Formula 1 is represented by the following Chemical Formula 2:
[Chemical Formula 2] SrTi_{1-y}B_{y}O_{3-δ}
in Chemical Formula 2,
B is Ni, Co, Fe, Mn, Cr, Mo, Ru or Rh,
y is a real number of more than 0 and less than 0.5, and
δ is a real number of more than 0 and less than 1.

8. The method of claim 6, wherein Chemical Formula 1 is represented by the following Chemical Formula 3 or 4:
[Chemical Formula 3] SrTi_{1-y}Ni_{y}O_{3-δ}
[Chemical Formula 4] Sr₁₋ₓYₓTi_{1-y}Ni_{y}O_{3-δ}
in Chemical Formulae 3 and 4,
x is a real number of more than 0 and less than 1,
y is a real number of more than 0 and less than 0.5, and
δ is a real number of more than 0 and less than 1.

## Patentansprüche

1. Katalysator zur Methanreformierung, bestehend aus:
einem porösen Metallträger; und
einer Katalysatorkomponente auf Basis von Perowskit, die auf dem porösen Metallträger getragen wird und durch die folgende chemische Formel 1 dargestellt wird,
wobei der poröse Metallträger aus einem oder mehreren, ausgewählt aus NiFeCrAl, NiCrAl, Edelstahl und Inconel, zusammengesetzt ist:
[Chemische Formel 1] Sr₁₋ₓAₓTi_{1-y}B_{y}O_{3-δ}
wobei in der chemischen Formel 1
A Y, La oder Ba ist,
B Ni, Co, Fe, Mn, Cr, Mo, Ru oder Rh ist,
x eine reelle Zahl von 0 oder mehr und weniger als 1 ist,
y eine reelle Zahl von mehr als 0 und weniger als 0,5 ist und
δ eine reelle Zahl von mehr als 0 und weniger als 1 ist.

2. Katalysator nach Anspruch 1, bei dem die chemische Formel 1 durch die folgende chemische Formel 2 dargestellt wird:
[Chemische Formel 2] SrTi_{1-y}B_{y}O_{3-δ}
wobei in der chemischen Formel 2
B Ni, Co, Fe, Mn, Cr, Mo, Ru oder Rh ist,
y eine reelle Zahl von mehr als 0 und weniger als 0,5 ist und
δ eine reelle Zahl von mehr als 0 und weniger als 1 ist.

3. Katalysator nach Anspruch 1, bei dem die chemische Formel 1 durch die folgende chemische Formel 3 oder 4 dargestellt wird:
[Chemische Formel 3] SrTi_{1-y}Ni_{y}O_{3-δ}
[Chemische Formel 4] Sr₁₋ₓYₓTi_{1-y}Ni_{y}O_{3-δ}
wobei in den chemischen Formeln 3 und 4
x eine reelle Zahl von mehr als 0 und weniger als 1 ist,
y eine reelle Zahl von mehr als 0 und weniger als 0,5 ist und
δ eine reelle Zahl von mehr als 0 und weniger als 1 ist.

4. Katalysator nach Anspruch 1, bei dem ein Gehalt der Katalysatorkomponente auf Basis von Perowskit 3 Gew.-% bis 40 Gew.-%, bezogen auf ein Gesamtgewicht des Katalysators zur Methanreformierung, beträgt.

5. Katalysator nach Anspruch 1, bei dem der Katalysator zur Methanreformierung auf ein Dampfreformierungsverfahren, ein Kohlendioxid(CO₂)-Reformierungsverfahren, ein katalytisches Teiloxidationsverfahren, ein autothermes Reformierungsverfahren, ein Trireformierungsverfahren oder ein Mischreformierungsverfahren angewendet wird.

6. Verfahren zur Herstellung eines Katalysators zur Methanreformierung, wobei das Verfahren umfasst:
Herstellen einer Lösung, die einen Vorläufer einer Katalysatorkomponente auf Basis von Perowskit umfasst, der durch die folgende chemische Formel 1 dargestellt wird;
Beschichten eines porösen Metallträgers mit der Lösung, die den Vorläufer der Katalysatorkomponente auf Basis von Perowskit umfasst; und
Trocknen und Brennen des porösen Metallträgers,
wobei der poröse Metallträger aus einem oder mehreren, ausgewählt aus NiFeCrAl, NiCrAl, Edelstahl und Inconel, zusammengesetzt ist:
[Chemische Formel 1] Sr₁₋ₓAₓTi_{1-y}B_{y}O_{3-δ}
wobei in der chemischen Formel 1
A Y, La oder Ba ist,
B Ni, Co, Fe, Mn, Cr, Mo, Ru oder Rh ist,
x eine reelle Zahl von 0 oder mehr und weniger als 1 ist,
y eine reelle Zahl von mehr als 0 und weniger als 0,5 ist und
δ eine reelle Zahl von mehr als 0 und weniger als 1 ist.

7. Verfahren nach Anspruch 6, bei dem die chemische Formel 1 durch die folgende chemische Formel 2 dargestellt wird:
[Chemische Formel 2] SrTi_{1-y}B_{y}O_{3-δ}
wobei in der chemischen Formel 2
B Ni, Co, Fe, Mn, Cr, Mo, Ru oder Rh ist,
y eine reelle Zahl von mehr als 0 und weniger als 0,5 ist und
δ eine reelle Zahl von mehr als 0 und weniger als 1 ist.

8. Verfahren nach Anspruch 6, bei dem die chemische Formel 1 durch die folgende chemische Formel 3 oder 4 dargestellt wird:
[Chemische Formel 3] SrTi_{1-y}Ni_{y}O_{3-δ}
[Chemische Formel 4] Sr₁₋ₓYₓTi_{1-y}Ni_{y}O_{3-δ}
wobei in den chemischen Formeln 3 und 4
x eine reelle Zahl von mehr als 0 und weniger als 1 ist,
y eine reelle Zahl von mehr als 0 und weniger als 0,5 ist und
δ eine reelle Zahl von mehr als 0 und weniger als 1 ist.

## Revendications

1. Catalyseur de reformage de méthane, composé :
d'un support métallique poreux ; et
d'un composant catalyseur à base de pérovskite soutenu sur le support métallique poreux et représenté par la Formule Chimique 1 suivante,
dans lequel le support métallique poreux se compose d'un ou de plusieurs éléments sélectionnés parmi le NiFeCrAl, NiCrAl, l'acier inoxydable et l'inconel ;
[Formule Chimique 1] Sr1-xAxTi1-yByO3-δ
où, dans la Formule Chimique 1,
A est Y, La ou Ba,
B est Ni, Co, Fe, Mn, Cr, Mo, Ru ou Rh,
x est un nombre réel de 0 ou plus et de moins de 1,
y est un nombre réel de plus de 0 et de moins de 0,5, et
δ est un nombre réel de plus de 0 et de moins de 1.

2. Catalyseur selon la revendication 1, où la Formule Chimique est représentée par la Formule Chimique 2 :
[Formule Chimique 2] SrTi_{1-y}B_{y}O_{3-δ}
dans la Formule Chimique 2,
B est Ni, Co, Fe, Mn, Cr, Mo, Ru ou Rh,
y est un nombre réel de plus de 0 et de moins de 0,5, et
δ est un nombre réel de plus de 0 et de moins de 1.

3. Catalyseur selon la revendication 1, où la Formule Chimique 1 est représentée par la Formule Chimique 3 ou 4 :
[Formule Chimique 3] SrTi_{1-y}Ni_{y}O_{3-δ}
[Formule Chimique 4] Sr₁₋ₓYₓTi_{1-y}O_{3-δ}
dans les Formules Chimiques 3 et 4,
x est un nombre réel de plus de 0 et de moins de 1,
y est un nombre réel de plus de 0 et de moins de 0,5, et
δ est un nombre réel de plus de 0 et de moins de 1.

4. Catalyseur selon la revendication 1, dans lequel une teneur en composé catalyseur à base de pérovskite est de 3 % en poids à 40 % en poids sur la base du poids total du catalyseur de reformage de méthane.

5. Catalyseur selon la revendication 1, où le catalyseur de reformage de méthane est appliqué à un procédé de vaporeformage, à un procédé de reformage au dioxyde de carbone (CO₂), à un procédé d'oxydation partielle catalytique, à un procédé de reformage autothermique, à un procédé de tri-reformage ou à un procédé de reformage mixte.

6. Procédé de production d'un catalyseur de reformage de méthane, le procédé comprenant :
préparer une solution comprenant un précurseur d'un composant catalyseur à base de pérovskite représenté par la Formule Chimique 1 suivante ;
revêtir un support métallique poreux avec la solution comprenant le précurseur du composant catalyseur à base de pérovskite ; et
sécher et calciner le support métallique poreux,
dans lequel le support métallique poreux se compose d'un ou de plusieurs éléments sélectionnés parmi le NiFeCrAl, NiCrAl, l'acier inoxydable et l'inconel ;
[Formule Chimique 1] Sr1-xAxTi1-yByO3-δ
où, dans la Formule Chimique 1,
A est Y, La ou Ba,
B est Ni, Co, Fe, Mn, Cr, Mo, Ru ou Rh,
x est un nombre réel de 0 ou plus et de moins de 1,
y est un nombre réel de plus de 0 et de moins de 0,5, et
δ est un nombre réel de plus de 0 et de moins de 1.

7. Procédé selon la revendication 6, où la Formule Chimique 1 est représentée par la Formule Chimique 2 suivante :
[Formule Chimique 2] SrTi_{1-y}B_{y}O_{3-δ}
dans la Formule Chimique 2,
B est Ni, Co, Fe, Mn, Cr, Mo, Ru ou Rh,
y est un nombre réel de plus de 0 et de moins de 0,5, et
δ est un nombre réel de plus de 0 et de moins de 1.

8. Procédé selon la revendication 6, où la Formule Chimique 1 est représentée par les Formules Chimiques 3 ou 4 suivantes :
[Formule Chimique 3] SrTi_{1-y}Ni_{y}O_{3-δ}
[Formule Chimique 4] Sr₁₋ₓYₓTi_{1-y}O_{3-δ}
dans les Formules Chimiques 3 et 4,
x est un nombre réel de plus de 0 et de moins de 1,
y est un nombre réel de plus de 0 et de moins de 0,5, et
δ est un nombre réel de plus de 0 et de moins de 1.
